# EUROPÄISCHE PATENTSCHRIFT

(11) **EP 3 202 573 B1**
(45) Veröffentlichungstag und Bekanntmachung des Hinweises auf die Patenterteilung: **20.06.2018**
(21) Anmeldenummer: 17151450.8
(22) Anmeldetag: 13.01.2017
(51) Int. Cl.: B33Y 10/00, B33Y 80/00, G01V 8/10

(54) **VERFAHREN ZUR HERSTELLUNG EINES OPTOELEKTRONISCHEN SENSORS**
METHOD OF PRODUCING AN OPTOELECTRONIC SENSOR
PROCÉDÉ DE FABRICATION D'UN CAPTEUR OPTOÉLECTRONIQUE

(30) Priorität: 04.02.2016 DE 102016101928
(43) Veröffentlichungstag der Anmeldung: 09.08.2017
(73) Patentinhaber: Sick AG, 79183 Waldkirch (DE)
(72) Erfinder: Nübling, Herr Ralf Ulrich, 79211 Denzlingen (DE)

(56) Entgegenhaltungen:
- US-A1- 2013 170 171
- US-A1- 2014 153 087
- US-A1- 2015 167 926
- KARL WILLIS ET AL: "Printed optics", UIST '12,PROCEEDINGS OF THE ANNUAL ACM SYMPOSIUM ON USER INTERFACE SOFTWARE AND TECHNOLOGY, 1. Januar 2012 (2012-01-01), Seite 589, XP055294374, CAMBRIDGE, MASSACHUSETTS, USA DOI: 10.1145/2380116.2380190 ISBN: 978-1-4503-1580-7
- Alok Kataria ET AL: "Building around inserts: methods for fabricating complex devices in stereolithography", Rapid Prototyping Journal, 1. Januar 2001 (2001-01-01), Seiten 253-262, XP055376379, Gefunden im Internet: URL:http://www.emeraldinsight.com/doi/pdfp lus/10.1108/13552540110410459 [gefunden am 2017-05-29]

## Beschreibung

Die Erfindung betrifft ein Verfahren zur Herstellung eines optoelektronischen Sensors nach dem Oberbegriff von Anspruch 1.

Für eine reibungslose Funktion muss in optoelektronischen Sensoren zur Erfüllung der jeweiligen Qualitätsanforderungen eine verlässliche Justierung gewährleistet werden. Es ist üblich, die Optikteile in einem eigens spezifizierten und hergestellten Optikträger unterzubringen, der für die gewünschte justierte Position und Orientierung sorgt. Der Optikträger besitzt dann beispielsweise hochgenaue Passflächen zur Aufnahme der Einzelteile. Optikträger wie Optikteile müssen dazu mit entsprechender Fertigungsgenauigkeit hergestellt sein. Alternativ sind händische oder auch automatisierte, dann aber aufwändig auf den speziell zu fertigenden Sensor abgestimmte Justier- und Befestigungsprozesse erforderlich. Eine weitere Lösung besteht darin, Freiheitsgrade im Design vorzusehen, und diese Verstellmöglichkeiten des Sensors werden dann bei der Endmontage oder in einem werkseitigen Kalibrierprozess zur Justierung genutzt. Auch das bindet über das aufwändigere Design mit den Verstellmöglichkeiten hinaus Betriebsmittel beziehungsweise Personalaufwand für die Durchführung. Bei allen diesen herkömmlichen Verfahren werden also durch die Justageanforderungen die Herstellkosten erheblich erhöht.

Die 3D-Drucktechnik etabliert sich immer stärker für die flexible Herstellung von Bauteilen nach beliebiger Spezifikation. Für optoelektronische Sensoren ist sie aber noch nicht einsetzbar. Es wird noch längere Zeit an der erforderlichen Präzision für hochwertige Optikteile oder auch nur von Optikträgern mit hinreichend geringen Toleranzen fehlen. Selbst das würde die oben angesprochene Justierung noch nicht gewährleisten, weil weiterhin ein nachgelagertes justiertes Zusammensetzen erfolgen muss. Mit der Problemstellung, optische Präzisionsteile und deren Halterungen im Verbund miteinander und mit den übrigen Komponenten eines Sensors zu drucken, wäre nämlich die verfügbare 3D-Drucktechnik erst recht völlig überfordert.

Die US 2014/0153087 A1 offenbart eine optische Vorrichtung mit zwei Baugruppen, die jeweils eine Halterung, eine Linse und einen Lichtleiter aufweisen. Die Halterungen können mittels additiver Fertigung hergestellt werden, wobei dann die Linsen anschließend in vorgesehene Nuten eingesetzt werden. Ohne weitere Erläuterungen erwähnt ist auch die Möglichkeit einer additiven Fertigung um die optischen Komponenten herum.

Die Arbeit Willis, Karl, et al. "Printed optics: 3D printing of embedded optical elements for interactive devices", Proceedings ofthe 25th annual ACM symposium on User interface software and technology, ACM, 2012 (D2) befasst sich primär damit, Vorrichtungen einschließlich optischer Elemente durch 3D-Druck herzustellen. Es wird aber auch die Möglichkeit diskutiert, Komponenten während des Drucks von Hand hinzuzufügen.

In der US 2015/0167926 A1 werden auf ein Substrat mit LEDs mit 3D-Druckverfahren Elemente unterschiedlicher Lichtdurchlässigkeit gedruckt, um verschiedene Beleuchtungseffekte einer LED-Lampe zu erzielen.

Die Arbeit Kataria, Alok, and David W. Rosen. "Building around inserts: methods for fabricating complex devices in stereolithography." Rapid Prototyping Journal 7.5 (2001): 253-262 beschäftigt sich mit der in situ Herstellung komplexer Vorrichtungen mit eingebetteten Komponenten.

Aus der US 2013/0170171 A1 ist bekannt, eine Vorrichtung mit Hohlräumen in einem additiven Fertigungsverfahren herzustellen und in diesen Hohlräumen Komponenten einschließlich optischer Komponenten anzuordnen.

Es ist daher Aufgabe der Erfindung, die Fertigung von Sensoren unter Beachtung von Justageanforderungen an dessen optische Komponenten zu vereinfachen.

Diese Aufgabe wird durch ein Verfahren zur Herstellung eines optoelektronischen Sensors nach Anspruch 1 gelöst. Mit dem Verfahren wird ein optoelektronischer Sensor hergestellt, dessen optische Komponenten eine geforderte Justage aufweisen. Die optischen Komponenten sind diejenigen, die zum optischen Pfad des Sensors beitragen. Das sind meist mehrere, aber die Erfindung wird zur Vereinfachung häufig nur anhand einer einzigen optischen Komponente erläutert, ohne damit eine Einschränkung zu implizieren, weil sich das Prinzip verallgemeinern lässt. Es ist denkbar, einige der optischen Komponenten nicht zu justieren, weil sie auch ohne Justierung oder mit einer nur sehr groben Justierung auskommen. Ebenso können einige der optischen Komponenten nicht gemäß der Erfindung, sondern mit einem anderen Konzept justiert werden, von denen einleitend einige genannt sind. Allgemein können für die Justierung sechs Freiheitsgrade in Lage und Orientierung gegenüber dem Gehäuse beziehungsweise relativ zu einem oder mehreren anderen optischen Komponenten berücksichtigt werden, wobei aber meist nur ein Freiheitsgrad für eine bestimmte optische Komponente relevant ist beziehungsweise mehrere, aber nicht alle Freiheitsgrade relevant sind.

Die Erfindung geht nun von dem Grundgedanken aus, die optische Komponente zunächst mit Hilfe einer Positioniereinrichtung frei im Raum zu positionieren. Die optische Komponente ist also anders als im Stand der Technik gerade nicht in eine vorgegebene Halterung eingebracht und kann so ohne jede Beschränkung justiert werden. Wenn das erreicht ist, wird um die optische Komponente herum mittels 3D-Druck ein Optikträger hergestellt, der die optische Komponente in der bereits erreichten Justierung fixiert. Diese Fixierung ist dann dauerhaft und bleibt im Sensor erhalten. Der Optikträger und die optische Komponente bilden nach vollendetem 3D-Druck ein gemeinsames Bauteil. Der Optikträger ist in dem Sinne um die optische Komponente gedruckt, dass beide direkt nach dem 3D-Druck in der richtigen Justierung zueinander stehen. Sie sind beispielsweise miteinander verbunden oder bilden ein gemeinsames Bauteil. Die Herstellung des Optikträgers enthält also zugleich den Schritt, mit dem sonst die optische Komponente in den Optikträger eingesetzt wird. Sofern der 3D-Druck das leistet, kann der Optikträger auch Verstellmöglichkeiten bieten, beispielsweise mehrere Rastpositionen, wobei sich dann nach der Herstellung die optische Komponente in der justierten Einstellung befindet, diese aber später variiert werden könnte.

Die Erfindung hat den Vorteil, dass eine besonders einfache und kostengünstige Herstellung von optoelektronischen Sensoren ermöglicht wird. Es erfolgt eine funktionsfertige Herstellung von Optikbaugruppen und ganzen Sensoren. Eine Herstellung von spezifizierten Optikträgern mit besonderen, meist sehr teuren Werkzeugen, etwa Spritzgusswerkzeugen, ist nicht erforderlich. Toleranzen des 3D-Drucks spielen keine Rolle, weil an der Schnittstelle zur optischen Komponente die Fixierung der Positioniereinrichtung für eine genaue Justierung sorgt. Ob dann der Optikträger an einer von der optischen Komponente abgewandten Seite ein gewisses Materialspiel aufweist, ist für die Funktion belanglos. Wegen der freien Positionierung der optischen Komponente im Raum unabhängig von anderen Sensorbauteilen stehen praktisch beliebige Freiheitsgrade für eine exakte, an die Aufgabe des Sensors angepasste Justierung zur Verfügung. Das erfindungsgemäße Verfahren erlaubt einen deutlich schnelleren und vereinfachten Übergang von Entwicklung zu Produktion, und es eignet sich ganz besonders für den Musteraufbau und Kleinserien oder sogar individuelle Sensoren.

Die Positioniereinrichtung wird vorzugsweise verstellt, um die vorgegebene Justierung der optischen Komponente einzustellen. Prinzipiell wäre auch denkbar, die Justierung über eine starre Vorgabe der Positioniereinrichtung oder Variationen zu erzielen, wie die optische Komponente in der Positioniereinrichtung festgehalten wird. Einfacher ist, wenn die Positioniereinrichtung selbst die benötigten Freiheitsgrade für eine Justierung zur Verfügung stellt.

Die Positioniereinrichtung wird bevorzugt mit einem eigenen Antrieb verstellt. Es handelt sich also um eine aktive Positioniereinrichtung, die nicht per Hand verschoben werden muss, sondern die beispielsweise mit einem Steuergerät oder einer Software an einen gewünschten Ort verfahrbar und/oder in eine gewünschte Ausrichtung verdrehbar ist.

Die Positioniereinrichtung wird bevorzugt von einem Roboter bedient oder ist Teil eines Roboters. Der Roboter oder Roboterarm ermöglicht einen automatischen Ablauf. Beispielsweise wird die optische Komponente in einem automatischen Ablauf aus einem Vorratsbehälter entnommen und in die justierte 6D-Lage gebracht, wobei wie oben schon erwähnt in der Regel nicht alle Freiheitsgrade relevant sind. Während dieser Positionierung kann eine Sensorfunktion aktiv sein, anhand derer der Roboter die optische Komponente so lange nachführt, bis die Sensorfunktion einer Spezifikation genügt.

Die Positioniereinrichtung wird bevorzugt nach dem oder während des 3D-Drucks entfernt. Beispielsweise lässt der Roboter los, sobald das Material des 3D-Drucks die optische Komponente in der Justierung fixiert. Je nach Material und Art des 3D-Druckverfahrens kann dazu auch eine Wartezeit zum Aushärten erforderlich sein. Nach der Entfernung der Positionierungseinrichtung ist ein weiterer 3D-Druckschritt denkbar, um die Herstellung des Optikträgers auch über die Greifbereiche hinweg abzuschließen.

Der Optikträger wird bevorzugt in dem 3D-Druckverfahren als Teil eines Gehäuses oder gemeinsam mit einem Gehäuse hergestellt. Es wird also nicht nur ein Optikträger gedruckt, sondern zugleich auch das Gehäuse. Dazu können außer der zu justierenden optischen Komponente auch weitere oder alle Bauteile des Sensors von der Positioniereinrichtung oder anderweitig im Bereich des 3D-Drucks gehalten werden.

Das Verbringen in die vorgegebene Justierung mit Hilfe der Positioniereinrichtung und das 3D-Druckverfahren erfolgt bevorzugt als gemeinsamer Fertigungsschritt in einer Fertigungslinie des Sensors. Der Optikträger wird also nicht vorab hergestellt, sondern vielmehr ist der dafür verantwortliche 3D-Drucker in die Fertigungslinie integriert, und die justierte Verbindung von Optikträger und optischer Komponente durch 3D-Druck ist nur ein Teilschritt der Endfertigung. Das ist deutlich schneller und effektiver. Die Positioniereinrichtung mit dem 3D-Drucker stellt praktisch eine Universalstation für verschiedenstes Sensoren dar, denn der Optikträger muss erst beim Start des 3D-Drucks festgelegt werden.

Die optische Komponente ist bevorzugt zumindest Teil eines Lichtsenders, eines Lichtempfängers, einer Sendeoptik oder einer Empfangsoptik. Das sind die wichtigsten Beispiele für optische Komponenten, die etwas konkreter Linsen, Spiegel, diffraktive optische Elemente, Blenden und diverse Filter, wie Pol- oder Farbfilter, sein können.

Die optische Komponente wird vorzugsweise mit Anschlussbereichen zum Halten in der Positioniereinrichtung und/oder für den im 3D-Druckverfahren hergestellten Optikträger versehen. Das erleichtert die Handhabung beziehungsweise eine stabile Verbindung mit der optischen Komponente beim 3D-Druck des Optikträgers. Die optische Komponente kann direkt mit den Anschlussbereichen spezifiziert und hergestellt sein, beispielsweise als erweiterte Linse mit Anschlussbereichen in einem Spritzgussverfahren. Denkbar ist aber auch, den 3D-Druck in zwei Schritte zu unterteilen, wobei zunächst Anschlussbereiche an die optische Komponente und dann erst der Optikträger gedruckt wird. Das kann auch im selben 3D-Drucker geschehen. Prinzipiell ist auch denkbar, die optische Komponente samt Anschlussbereichen im 3D-Druck zu erstellen, aber dazu wären die einleitend schon genannten Schwierigkeiten zu überwinden, mit 3D-Druck genügend Präzision für ein hochwertiges optisches Bauteil zu erreichen. Ein erfindungsgemäß hergestellter Sensor zeichnet sich dadurch aus, dass die vorgegebene Justierung der optischen Komponente durch einen Optikträger erreicht wird, der in einem 3D-Druckverfahren um die optische Komponente herum gedruckt ist. Dazu kann insbesondere jede Ausführungsform des erfindungsgemäßen Herstellungsverfahrens genutzt werden.

Ein erfindungsgemäß hergestellter Sensor ist vorzugsweise ein industrieller Sensor, beispielsweise eine Lichtschranke, ein Lichttaster, insbesondere ein entfernungsmessender Lichttaster, ein Laserscanner, ein Codeleser oder eine Kamera in ein bis drei Dimensionen. Derartige Sensoren werden oft in einer stationären Montage zur Überwachung beispielsweise eines Arbeitsbereichs oder einer Roboterzelle, zur Absicherung oder Unterstützung des Prozesses, oder an Förderbändern eingesetzt.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Darstellung eines beispielhaften optoelektronischen Sensors;
- Fig. 2: eine Darstellung zweier zueinander justiert zu halternder optischer Komponenten in einem ersten Teilschritt, in dem sie positioniert werden;
- Fig. 3: eine Darstellung ähnlich Figur 2, jedoch in einem zweiten Teilschritt, in dem unter Fixierung der Justierung um die optischen Komponenten ein Optikträger mittels 3D-Druck hergestellt wird; und
- Fig. 4a-b: eine Vorderansicht und ein Schnitt einer beispielhaft als optische Komponente gewählten Linse mit einem Anschlussbereich, der den 3D-Druck erleichtert.

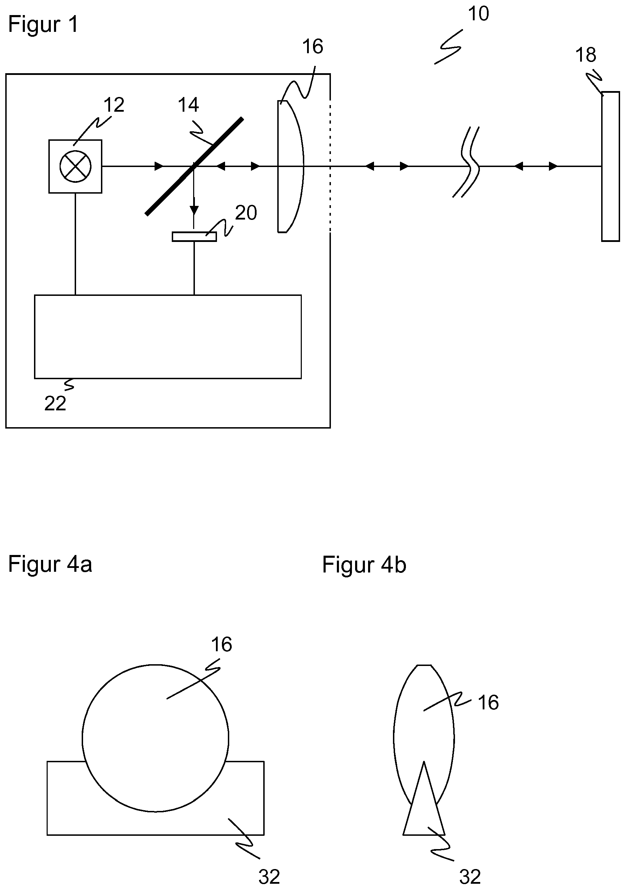

Figur 1 zeigt eine schematische Darstellung eines optoelektronischen Sensors 10. Darin sendet ein Lichtsender 12 ein Lichtsignal aus, das durch einen Teilerspiegel 14 hindurchtritt und dann mittels einer Linse 16 auf ein Objekt 18 geführt wird. Nach Remission oder Reflexion kehrt ein Teil des Lichtsignals zurück, wird von der Linse 16 gebündelt und von dem Teilerspiegel 14 auf einen Lichtempfänger 20 umgelenkt. Eine Auswertungseinheit 22 ist mit dem Lichtsender 12 und dem Lichtempfänger 20 verbunden. Auf diese Weise wird mittels Lichtsender 12 ein gewünschtes Lichtsignal erzeugt und das daraufhin von dem Lichtempfänger 20 erzeugte Empfangssignal ausgewertet, um beispielsweise die Anwesenheit des Objekts 18 festzustellen.

Zu dem somit als Lichttaster ausgestalteten Sensor 10 sind zahlreiche alternative Bauformen bekannt, in denen beispielsweise keine Autokollimation mittels Teilerspiegel 14 stattfindet, mehrere Lichtsender 12 oder Lichtempfänger 20 vorhanden sind, die Sende- und Empfangsoptik 16 getrennt ist, ein Objektiv anstelle einer einfachen Linse aufweist, reflexiv oder diffraktiv statt refraktiv wirkt, zusätzliche Filter oder Blenden vorgesehen sind oder diverse Auswertungen erfolgen, etwa eine Distanzbestimmung durch ein Lichtlaufzeitverfahren oder durch Triangulation. Andere optoelektronische Sensoren als Lichttaster sind in einer nicht abschließenden Aufzählung Lichtschranken, Laserscanner, Codeleser oder Kameras, von einfachen Zeilenkameras bis hin zu 3D-Kameras.

Die Erfindung ist nicht auf einen bestimmten Sensortyp oder eine bestimmte Bauform beschränkt. Vielmehr kommt es nur darauf an, dass mindestens eine optische Komponente vorhanden ist, die für eine korrekte Funktion des Sensors eine justierte Position und/oder Orientierung relativ zum Sensor oder zu einer anderen optischen Komponente haben muss. Diese optischen Komponenten können im Ausführungsbeispiel der Figur 1 der Lichtsender 10, der Teilerspiegel 14, die Linse 16 und/oder der Lichtempfänger 20 sein.

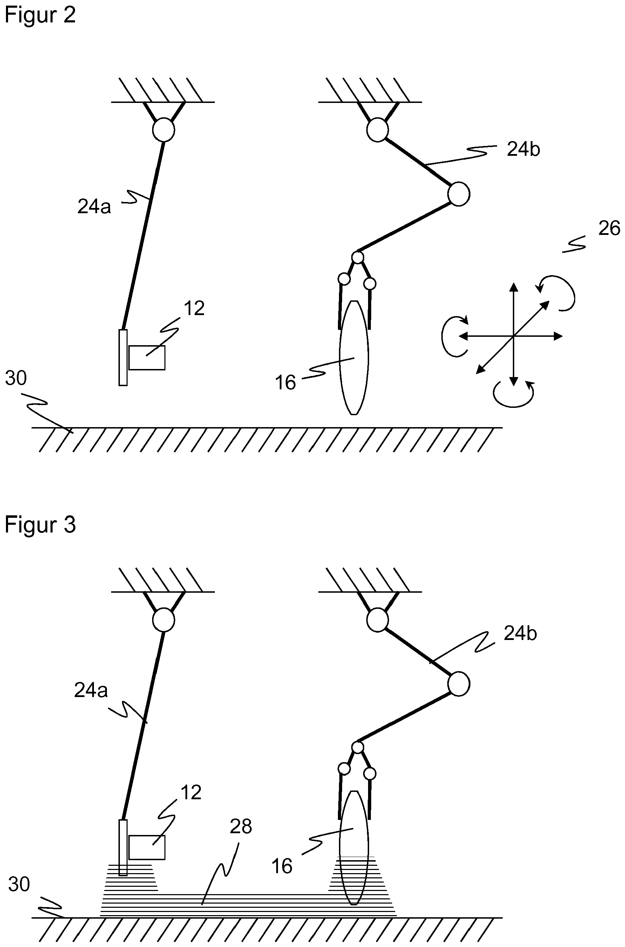

Die Figuren 2 und 3 zeigen die betreffenden Herstellungsschritte, mit denen die optischen Komponenten mit einem durch 3D-Druck hergestellten Optikträger in der gewünschten Justierung fixiert werden. Es müssen nicht alle optischen Komponenten auf diese Weise justiert werden. Es ist auch denkbar, einige optische Komponenten auf anderem Wege zu justieren, und nochmals andere optische Komponenten bedürfen möglicherweise keiner Justierung oder nur einer ganz groben Justierung.

Figur 2 zeigt einen ersten der betreffenden Herstellungsschritte, in dem zwei optische Komponenten, nämlich der Lichtsender 12 und die Linse 16, zueinander positioniert werden. Die optischen Komponenten sind rein beispielhaft zu verstehen, ebenso könnte der Lichtempfänger 20 zu der Linse 16, zwei oder mehr beliebige optische Komponenten zueinander oder nur eine optische Komponente zu dem noch zu erstellenden Optikträger justiert positioniert werden.

In dem ersten Herstellungsschritt werden die zueinander auszurichtenden optischen Komponenten 12, 16 mit Hilfe einer Positioniereinrichtung 24a-b so frei im Raum positioniert, dass sich das gewünschte Zusammenspiel ergibt. In dem dargestellten Beispiel wird die eine optische Komponente 12 von einem starren Teil 24a der Positioniereinrichtung gehalten und nur die andere optische Komponente 16 bewegt. Das genügt dann und vereinfacht die Positioniereinrichtung 24a-b, wenn es nur auf die relative Position der optischen Komponenten 12, 16 zueinander ankommt. In anderen Ausführungsformen kann auch der starrte Teil 24a ersetzt werden, um beide optischen Komponenten 16 zu bewegen.

Um die optische Komponente 16 zu bewegen, ist der bewegliche Teil 24b der Positioniereinrichtung beispielsweise ein Roboterarm, wobei aber auch andere elektrisch verstellbare oder mechanische Bewegungen denkbar sind. Die Bewegungsfreiheit des beweglichen Teils 24b in allen sechs Freiheitsgraden der Translation und Rotation ist durch ein Achsensystem 26 symbolisiert. Häufig wird nur ein Teil dieser Freiheitsgrade tatsächlich benötigt, beispielsweise nur ein Freiheitsgrad der Translation auf der Achse zwischen den optischen Komponenten 12, 16 zur Einstellung des Abstands. Dazu genügt dann ein entsprechend vereinfachter beweglicher Teil 24b der Positioniereinrichtung.

Es kann verschiedene Kriterien geben, wann die Bewegung abgeschlossen ist und sich demnach die optischen Komponenten 12, 16 in der erforderlichen Lage befinden. Denkbar ist, dass die Aufnahmen der Positioniereinrichtung 24a-b sehr präzise sind, so dass es genügt, eine vorbestimmte fixe Lage anzufahren. Meist wird aber auch eine Form von Feedback einfließen. Das kann ein Vergleich mit einer Sollposition durch eine Kamera oder eine Bedienperson sein. Für besonders genaue Ausrichtergebnisse ist es nützlich, den einzustellenden optischen Pfad zu aktivieren und zu prüfen, ob sich das gewünschte Ergebnis einstellt. Im Beispiel der Figur 2 kann dazu der Lichtsender 12 eingeschaltet und der Lichtfleck hinter der Linse 16 kontrolliert werden.

Sobald sich auf einem der beispielhaft geschilderten oder einem anderen Weg die optischen Komponenten 12, 16 mit Hilfe der Positioniereinrichtung 24a-b in der gewünschten Ausrichtung befinden, ist der erste Herstellungsschritt abgeschlossen.

Figur 3 illustriert den sich anschließenden zweiten Herstellungsschritt. Die Positioniereinrichtung 24a-b verharrt in der zuvor erreichten Stellung und hält so die optischen Komponenten 12, 16 in der gewünschten Ausrichtung. Dann wird in einem 3D-Druckverfahren eines der Übersicht halber nicht gezeigten 3D-Druckers ein Optikträger 28 um die optischen Komponenten 12, 16 herum aufgebaut, der die optischen Komponenten 12, 16 in der erreichten Ausrichtung fixiert. Das Streifenmuster in Figur 3 deutet einen Schichtaufbau des 3D-Druckverfahrens auf einem Untergrund 30 an, beispielsweise einer Werkbank, womit aber kein spezielles 3D-Druckverfahren festgelegt werden soll.

Die optischen Komponenten 12, 16 können von der Positioniereinrichtung 24a-b freigegeben werden, sobald sie ausreichend fixiert sind. Es ist denkbar, erst anschließend den 3D-Druck abzuschließen, wenn dies wegen des Greifkontakts zuvor nicht möglich war. Dabei kann es während des 3D-Drucks oder danach Wartezeiten geben, damit das Material des Optikträgers 28 abkühlt oder aushärtet.

Der 3D-Druck ist nicht allein auf den Optikträger 28 beschränkt, sondern es kann eine größere Baugruppe mit dem Optikträger 28 oder das ganze Gehäuse gedruckt werden. Dabei können natürlich mehr oder weniger als die beispielhaft gezeigten zwei optischen Komponenten 12, 16 in einer justierten Position gehalten sein. Andererseits ist auch möglich, lediglich Aufnahmen für solche Bauteile zu drucken, deren Ausrichtung mit den Toleranzen des 3D-Drucks zurechtkommt, und diese Bauteile nachträglich einzusetzen. Auch nicht optische Komponenten können in den 3D-Druck eingebunden werden, beispielsweise durch Anbindung eines Elektromotors, die Fixierung ganzer Elektronikkarten oder sonstiger weiterer Sensorkomponenten.

Figur 4 illustriert noch eine denkbare unterstützende Maßnahme für den 3D-Druck. Dabei ist Figur 4a eine Vorderansicht und Figur 4b ein Schnitt der Linse 16 als natürlich austauschbares Beispiel einer optischen Komponente. Die Linse 16 ist in dieser Ausführungsform mit "Ohren" oder Anschlussbereichen 32 versehen. Die Anschlussbereiche 32 vereinfachen es der Positioniereinrichtung 24a-b, die Linse 16 zu greifen und während des 3D-Drucks stabil in der gewünschten Ausrichtung zu fixieren. Außerdem können sie für eine bessere Anbindung zwischen der Linse 16 und dem gedruckten Optikträger 28 sorgen. Die Anschlussbereiche 32 können mit der Linse 16 einstückig hergestellt sein, etwa im Spritzgussverfahren, oder die Linse 16 wird mit dem Anschlussbereich 32 zusammengesetzt. Dabei ist keine besondere Präzision erforderlich, weil es nicht auf die gegenseitige Ausrichtung von Linse 16 und Anschlussbereich 32, sondern auf die effektive Ausrichtung der ja zunächst mit Hilfe der Positioniereinrichtung 24a-b frei positionierbaren Linse 16 ankommt.

Die Positioniereinrichtung 24a-b, beispielsweise ein Roboter, bildet zusammen mit dem 3D-Drucker eine Art Universalstation für die funktionsfertige Herstellung unterschiedlichster, fertig justierter optischer Baugruppen. Ein besonderer Vorteil ist, dass der erfindungsgemäße Herstellungsprozess mit Positionierung und 3D-Druck direkt in der Fertigungslinie stattfinden kann. Das beschleunigt die Herstellung gegenüber einer herkömmlichen, zeitlich vorgelagerten Herstellung eines Optikträgers 28 ganz erheblich. Zudem ist es sehr einfach und kostengünstig, jede gewünschte Ausrichtung sicherzustellen. Außerdem wird die Fertigungslinie hoch flexibel für verschiedenste Sensorvarianten oder gar Sensortypen. Damit werden auch Klein- und Kleinstserien oder sogar individuell spezifizierte Sensoren wirtschaftlich herstellbar. Außerdem eignet sich das Verfahren für die Erstellung von Prototypen und beschleunigt deutlich die Entwicklung sowie den Übergang von Entwicklung zu Serienproduktion.

## Patentansprüche

1. Verfahren zur Herstellung eines optoelektronischen Sensors (10), der mindestens eine optische Komponente (12, 16) in einer vorgegebenen Justierung aufweist,
**dadurch gekennzeichnet,**
**dass** die optische Komponente (12, 16) zunächst mit Hilfe einer Positioniereinrichtung (24a-b) in die vorgegebene Justierung gebracht und von der Positioniereinrichtung (24a-b) in dieser Stellung gehalten wird und dass anschließend in einem 3D-Druckverfahren um die optische Komponente (12, 16) ein Optikträger (28) hergestellt wird, der die optische Komponente (12, 16) in der vorgegebenen Justierung fixiert, und dass die optische Komponente (12, 16) von der Positioniereinrichtung (24a-b) freigegeben wird, nachdem das Material des 3D-Druckverfahrens die optische Komponente in der Justierung fixiert.

2. Verfahren nach Anspruch 1,
wobei die Positioniereinrichtung (24a-b) verstellt wird, um die vorgegebene Justierung der optischen Komponente (12, 16) einzustellen.

3. Verfahren nach Anspruch 2,
wobei die Positioniereinrichtung (12, 16) mit einem eigenen Antrieb verstellt wird.

4. Verfahren nach einem der vorhergehenden Ansprüche,
wobei die Positioniereinrichtung (24a-b) von einem Roboter bedient wird oder Teil eines Roboters ist.

5. Verfahren nach einem der vorhergehenden Ansprüche,
wobei der Optikträger (28) in dem 3D-Druckverfahren als Teil eines Gehäuses oder gemeinsam mit einem Gehäuse hergestellt wird.

6. Verfahren nach einem der vorhergehenden Ansprüche,
wobei das Verbringen in die vorgegebene Justierung mit Hilfe der Positioniereinrichtung (24a-b) und das 3D-Druckverfahren als gemeinsamer Fertigungsschritt in einer Fertigungslinie des Sensors (10) erfolgt.

7. Verfahren nach einem der vorhergehenden Ansprüche,
wobei die optische Komponente zumindest Teil eines Lichtsenders (12), eines Lichtempfängers (20), einer Sendeoptik (16) oder einer Empfangsoptik (16) ist.

8. Verfahren nach einem der vorhergehenden Ansprüche,
wobei die optische Komponente (12, 16) mit Anschlussbereichen (32) zum Halten in der Positioniereinrichtung (24a-b) und/oder für den im 3D-Druckverfahren hergestellten Optikträger (28) versehen wird.

## Claims

1. A method of manufacturing an optoelectronic sensor (10) having at least one optical component (12, 16) in a predetermined adjustment,
**characterized in that** in a first step the optical component (12, 16) is brought into the predetermined adjustment by means of a positioning device (24a-b) and is held in this adjustment by the positioning device (24a-b) and **in that** subsequently an optics holder (28) which fixes the optical component (12, 16) in the predetermined adjustment is produced around the optical component (12, 16) in a 3D printing process, and **in that** the optical component (12, 16) is released by the positioning device (24a-b) once the material of the 3D printing process fixes the optical component (12, 16) in the adjustment.

2. The method according to claim 1,
wherein the positioning device (24a-b) is adjusted in order to set the predetermined adjustment of the optical component (12, 16).

3. The method according to claim 2,
wherein the positioning device (12, 16) is adjusted with its own drive.

4. The method according to any one of the preceding claims,
wherein the positioning device (24a-b) is operated by a robot or is part of a robot.

5. The method according to any one of the preceding claims,
wherein the optics holder (28) is produced in the 3D printing process as part of a housing or together with a housing.

6. The method according to any one of the preceding claims,
wherein the process of bringing the optical component (12, 16) into the predetermined adjustment by means of the positioning device (24a-b) and the 3D printing process are done as a common manufacturing step in an assembly line of the sensor (10).

7. The method according to any one of the preceding claims,
wherein the optical component is at least part of a light transmitter (12), a light receiver (20), a transmission optics (16) or a reception optics (16).

8. The method according to any one of the preceding claims,
wherein the optical component (12, 16) is provided with connection areas (32) for holding in the positioning device (24a-b) and/or for the optics holder (28) produced in the 3D printing process.

## Revendications

1. Procédé de fabrication d'un capteur optoélectronique (10) qui comprend au moins un composant optique (12, 16) dans un ajustement prédéterminé, **caractérisé en ce que**
le composant optique (12, 16) est tout d'abord amené dans l'ajustement prédéterminé à l'aide d'un moyen de positionnement (24a - b) et est maintenu dans cette configuration par le moyen de positionnement (24a - b), et ensuite, par un procédé d'impression 3D, un support d'optique (28) est réalisé autour du composant optique (12, 16), qui fixe le composant optique (12, 16) dans l'ajustement prédéterminé, et **en ce que** le composant optique (12, 16) est libéré du moyen de positionnement (24a - b) une fois que le matériau du procédé d'impression 3D fixe le composant optique dans l'ajustement.

2. Procédé selon la revendication 1,
dans lequel le moyen de positionnement (24a - b) est déplacé pour régler l'ajustement prédéterminé du composant optique (12, 16).

3. Procédé selon la revendication 2,
dans lequel le moyen de positionnement (12, 16) est déplacé par un propre entraînement.

4. Procédé selon l'une des revendications précédentes,
dans lequel le moyen de positionnement (24a - b) est manipulé par un robot ou fait partie d'un robot.

5. Procédé selon l'une des revendications précédentes,
dans lequel le support d'optique (28) est fabriqué par le procédé d'impression 3D en tant que partie d'un boîtier ou conjointement avec un boîtier.

6. Procédé selon l'une des revendications précédentes,
dans lequel le déplacement dans l'ajustement prédéterminé à l'aide du moyen de positionnement (24a - b) et le procédé d'impression 3D s'effectuent en tant qu'étape de fabrication commune dans une ligne de fabrication du capteur (10).

7. Procédé selon l'une des revendications précédentes,
dans lequel le composant optique fait au moins partie d'un émetteur de lumière (12), d'un récepteur de lumière (20), d'une optique d'émission (16) ou d'une optique de réception (16).

8. Procédé selon l'une des revendications précédentes,
dans lequel le composant optique (12, 16) est pourvu de zones de raccordement (32) pour le maintien dans le moyen de positionnement (24a - b) et/ou pour le support d'optique (28) fabriqué par le procédé d'impression 3D.
